# EUROPÄISCHE PATENTSCHRIFT

(11) **EP 1 651 026 B1**
(45) Veröffentlichungstag und Bekanntmachung des Hinweises auf die Patenterteilung: **24.03.2010**
(21) Anmeldenummer: 04741087.3
(22) Anmeldetag: 16.07.2004
(51) Int. Cl.: A01D 34/416, A01G 3/06

(54) **FADENSCHNEIDER**
LINE TRIMMER
TAILLE-HERBE A FIL

(30) Priorität: 19.07.2003 DE 10332918
(43) Veröffentlichungstag der Anmeldung: 03.05.2006
(73) Patentinhaber: Wolf-Garten GmbH & Co. KG, 57518 Betzdorf (DE)
(72) Erfinder: ORTHEY, Gebhard, 57583 Nauroth (DE); HELD, Peter, 57584 Scheuerfeld (DE)
(74) Vertreter: Koch, Günther
(86) Internationale Anmeldenummer: PCT/EP2004/007951
(87) Internationale Veröffentlichungsnummer: WO 2005/009110

(56) Entgegenhaltungen:
- EP-A- 0 005 540
- EP-A- 0 976 313
- US-A- 4 442 659
- US-A- 5 450 715
- US-A- 5 970 694
- US-B1- 6 351 930

## Beschreibung

Die vorliegende Erfindung betrifft ein handgeführtes mit Stiel ausgerüstetes Gartengerät, vorzugsweise in Form eines Fadenschneiders, dessen Schneidaggregat aus einem Antriebsmotor, einem eine Fadenspule aufnehmenden Rotor und einem radial vorstehenden Schneidfaden sowie einem Schutzschirm für diesen besteht. Derartige Fadenschneider sind am Ende eines Führungsstieles befestigt, mit dem das Gerät über dem Boden geführt und dabei in Bodennähe gehalten oder über den Schutzschirm am Boden abgestützt wird. Es ist auch bekannt (vergleiche US-A-5450715 und US 2002/0189221 A1), am Führungsstiel eines Fadenschneiders Laufräder oder Laufrollen anzuordnen, um die Führung des Gerätes zu erleichtern. Hierdurch wird die Führung des Gerätes in einer vorbestimmten Höhe über dem Boden erleichtert, jedoch können Schnittsituationen mit abweichender Schnitthöhe oder geneigter Schneidebene nur schwierig freihändig und unter Verletzungsgefahr durchgeführt werden und die Laufräder sind nur unter Zuhilfenahme von Werkzeugen abnehmbar und/oder in ihrer Lage und Höhe verstellbar.

Der Erfindung liegt daher die Aufgabe zugrunde, einen als Universalgerät ausgebildeten Fadenschneider zur Verfügung zu stellen, der allen in der Praxis vorkommenden Schneidsituationen optimal anpassbar ist, indem die Laufräder oder Laufrollen schnell, einfach und werkzeugunabhängig montiert und demontiert sowie verstellt werden können.

Der am Führungsstiel anklemmbare Stützfuß, der an seinem freien Ende Laufrollen oder auch Gleitkufen trägt, mit denen das Gerät am Boden abgestützt bzw. verfahren werden kann, ermöglicht eine besonders zweckmäßige und bequeme Handhabung des Gerätes. Durch entsprechende Höheneinstellung am Führungsstiel kann die Schnitthöhe eingestellt und mühelos eingehalten werden. Dieser Stützfuß weist eine Klemmschelle auf, die es ermöglicht, den Stützfuß radial auf den Führungsstiel aufzusetzen und dort einzurasten und festzuklemmen. Der Fadenschneider kann daher freihändig ohne Stützfuß oder auf dem Stützfuß abfahrend benutzt werden. Ein weiterer Vorteil der erfindungsgemäßen Ausbildung des Stützfußes besteht darin, dass dieser auch am Stiel anderer Gartengeräte festgeklemmt werden kann, wenn deren Stieldurchmesser dem Durchmesser der Klemmhülse entspricht. Für andere Stieldurchmesser können entsprechende Adapter vorgesehen werden.

Der Stützfuß ist zur Verwendung bei dem Fadenschneider zweckmäßigerweise bogenförmig oder nach hinten ausladend in der Weise angeordnet, dass durch den am Führungsstiel festgeklemmten Stützfuß die Kipp- und Schwenkbewegung des Fadenschneideraggregates nicht behindert wird.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

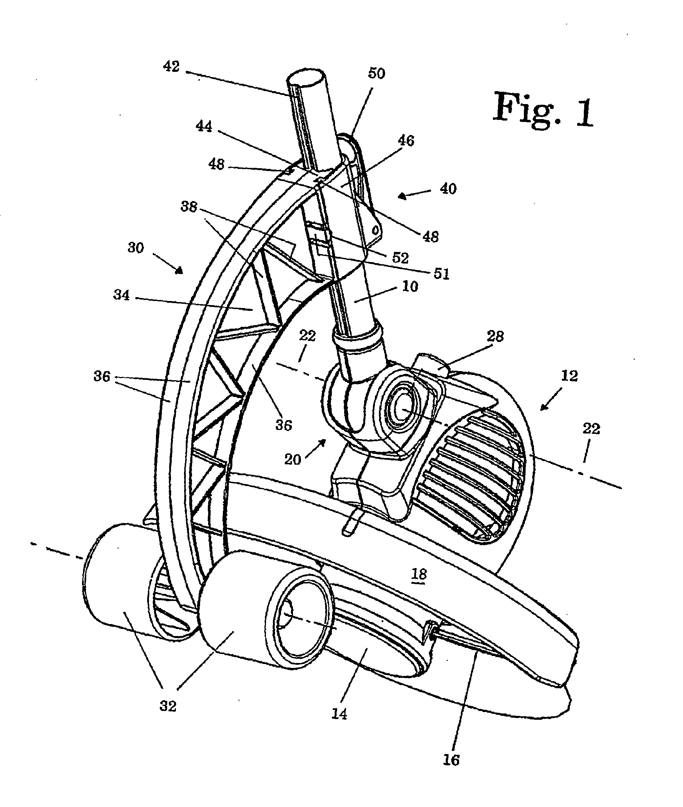

Fig. 1 ist eine perspektivische Darstellung eines Fadenschneiders mit einem am Stiel festklemmbaren mit Laufrollen versehenen Stützfuß;

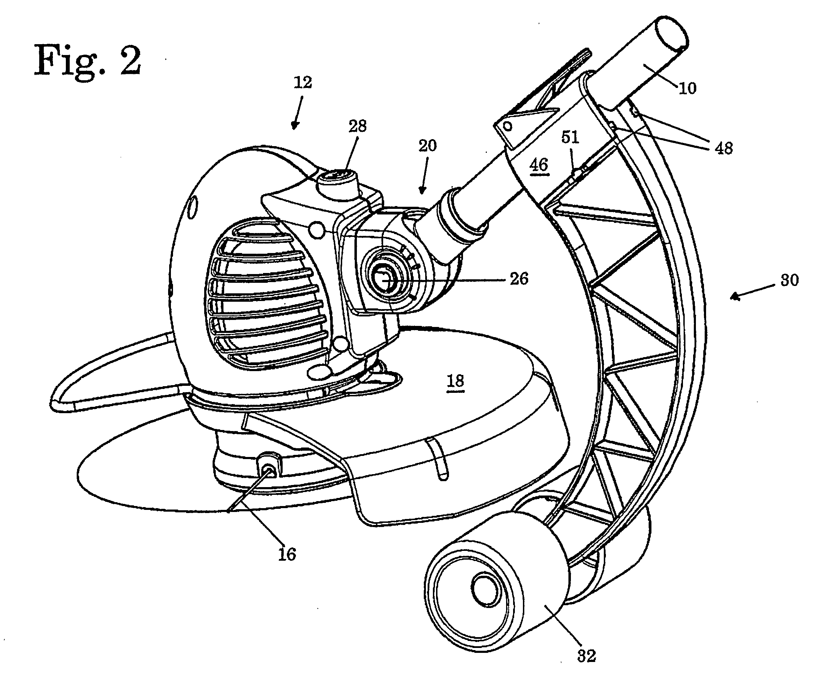

Fig. 2 ist eine perspektivische Ansicht des in Fig. 1 dargestellten Fadenschneiders, bei dem die Schneidebene im Wesentlichen parallel zum Boden eingestellt ist;

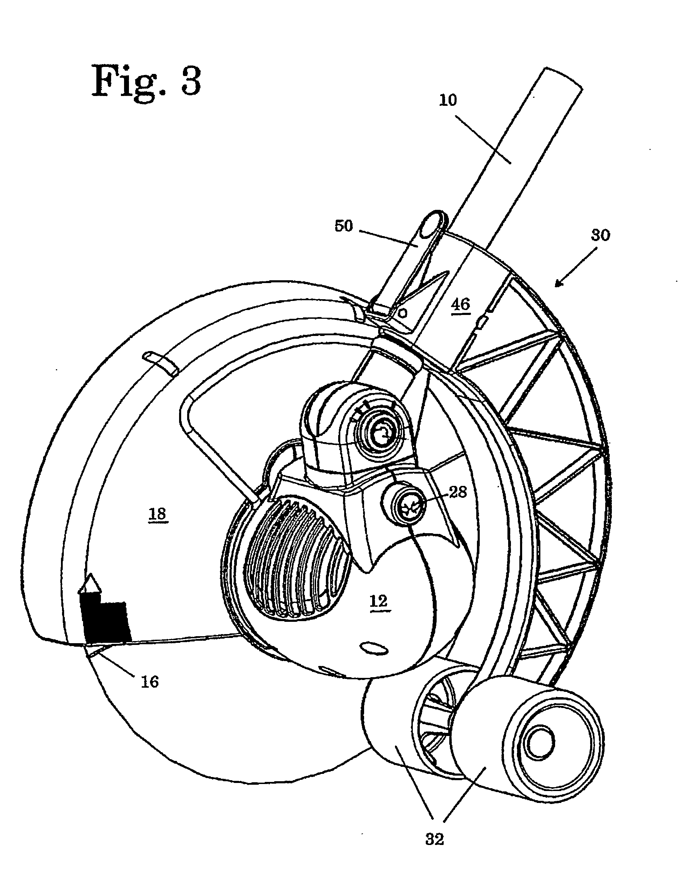

Fig. 3 ist eine perspektivische Darstellung des Fadenschneiders gemäß Fig. 1, wobei die Schneidebene im Wesentlichen senkrecht zum Boden eingestellt ist;

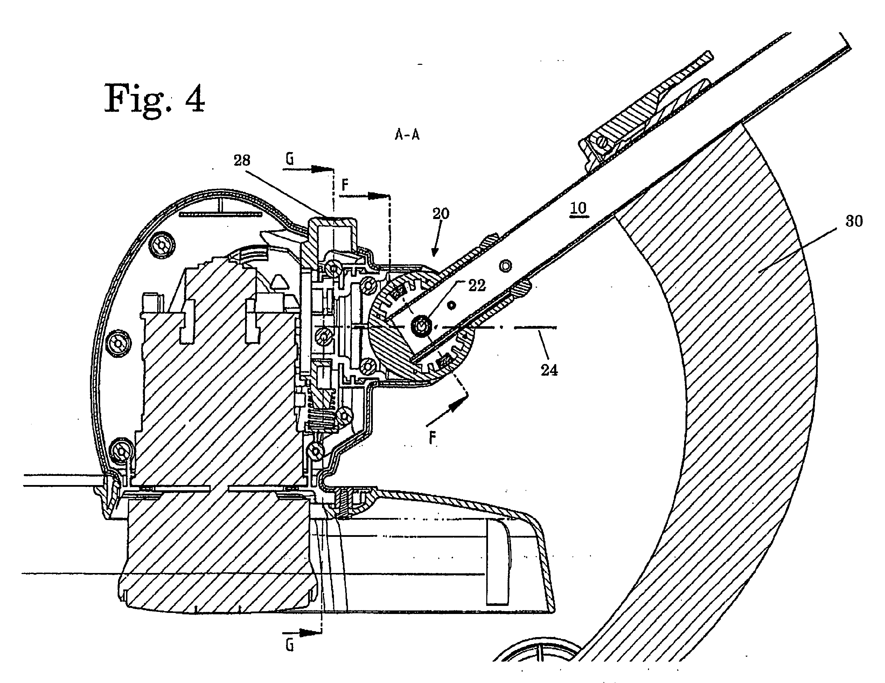

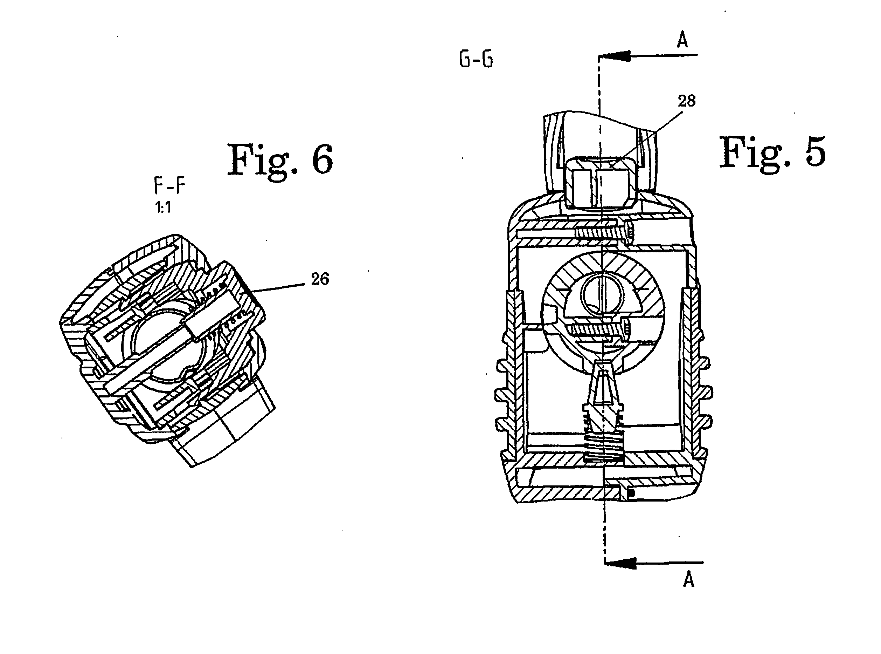

Fig. 4 ist ein Schnitt des Fadenschneiders mit seiner Gelenkanordnung, geschnitten nach der Linie A-A gemäß Fig. 5;
Fig. 5 ist ein Schnitt nach der Linie F-F gemäß Fig. 4;
Fig. 6 ist ein Schnitt nach der Linie G-G gemäß Fig. 4;

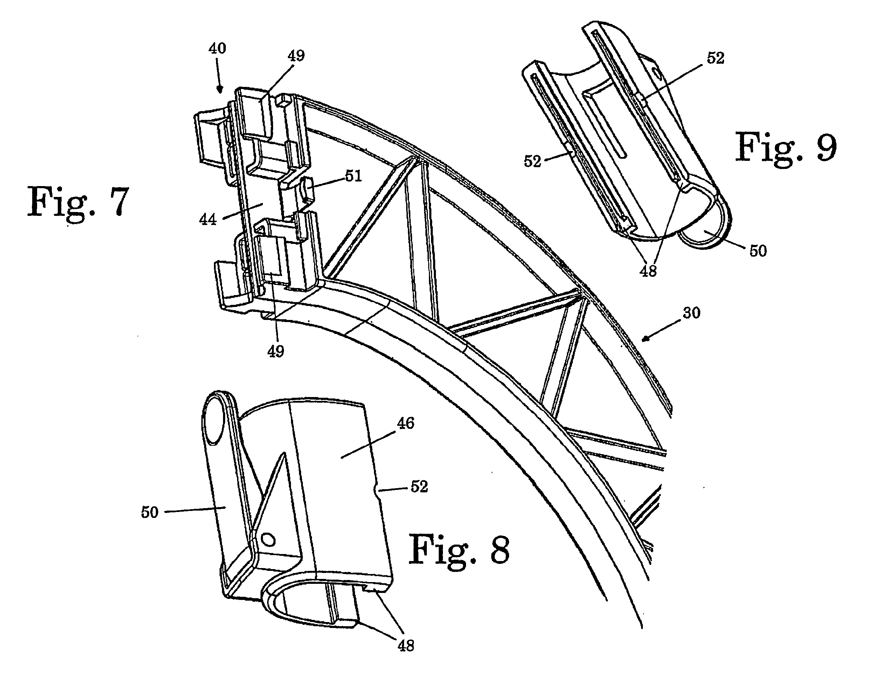

Fig. 7 ist eine perspektivische Teilansicht des Stützfußes;
Fig. 8 ist eine perspektivische Ansicht der Klemmschale mit Exzenterhebel;
Fig. 9 ist eine Innenansicht der Klemmschale.

Das untere Ende eines Führungsstiels 10 trägt ein Faderschneideraggregat 12 mit einem Antriebsmotor, der einen Rotor 14 antreibt, der eine Fadenspule beherbergt und aus dem der Schneidfaden 16 radial vorsteht. Die Schneidebene des Schneidfadens 16 ist von einem Schutzschirm 18 umschlossen. Der Antriebsmotor ist vorzugsweise ein Elektromotor, und das Zuführungskabel verläuft durch den Stiel 10, der in seinem in der Zeichnung nicht dargestellten mittleren und oberen Teil mit den üblichen Führungsgriffen und Schaltern ausgerüstet ist. Das Fadensschneideraggegat 12 wird vom Führungsstiel 10 über eine Doppelgelenkanordnung 20 getragen, wodurch die durch den umlaufenden Schneidfaden 16 definierte Schneidebene verstellt werden kann. Die Doppelgelenkanordnung weist eine erste Achse 22 und eine zweite Achse 24 auf. Die erste Achse 22 schneidet die Achse des Führungsstiels 10 senkrecht und ermöglicht eine Kippbewegung des Fadenschneideraggregates gegenüber dem Führungsstiel, wodurch die Schneidebene in Vorlaufrichtung gegenüber dem Boden bzw. dem Führungsstiel anstellbar ist. Mehrere Kippstellungen sind über formschlüssige Rastungen einstellbar, wobei die Auslösung der Formschlussverbindung über einen ersten Auslöseknopf 26 erfolgen kann. Die zweite Achse 24 der Doppelgelenkanordnung 20 schneidet die erste Achse 22 senkrecht. Gemäß dem dargestellten Ausführungsbeispiel schneidet die zweite Achse 24 dabei auch die Achse des Führungsstiels 10 und die Motorachse des Antriebsmotors. Es ist jedoch auch eine seitliche Versetzung denkbar. Um diese zweite Achse kann das Fadenschneideraggregat 12 in die vertikale Schneidstellung überführt werden, um eine Trimmung seitlich überstehender Pflanzenteile zu bewirken. Auch um diese Schwenkachse 24 ist das Motoraggregat in mehreren Schwenkstellungen formschlüssig feststellbar, wobei die Auslösung über einen zweiten federbelasteten Auslöseknopf 28 erfolgen kann. Die Anordnung der formschlüssigen Fixierungsmöglichkeiten um die Kippachse 22 und die Schwenkachse 24 ist derart gewählt, dass alle in der Praxis vorkommenden Schneidvorgänge optimal einstellbar sind, während andere nicht benötigte oder im Hinblick auf mögliche Verletzungsgefahr unzweckmäßige Kipp- und/oder Schwenkstellungen ausgeschaltet sind.

Der Fadenschneider kann freihändig in der eingestellten Kipp- und Schwenkstellung über den Führungsstiel geführt werden. Zur Erleichterung der Führung und zur Einstellung unterschiedlicher Bodenabstände ist erfindungsgemäß ein Stützfuß 30 vorgesehen, der am Führungsstiel 10 festklemmbar ist und an seinem unteren Ende zwei Laufrollen 32 oder auch Gleitkufen trägt. Der Stützfuß 30 ist aus Kunststoff hergestellt und besteht aus einer bogenförmig gekrümmten Platte 34 mit innen und außen verlaufenden vorstehenden Randleisten 36 und zick-zack-förmig zwischen den inneren und äußeren Randleisten 36 verlaufenden Verstärkungsrippen 38. Der Stützfuß 30 ist am Führungsstiel 10 in jeder Höhenstellung durch eine Klemmhülse festlegbar, die aus einer am Stützfuß 30 ansetzenden Lagerschale 40 und einer auf diese aufsetzbaren Klemmschale 46 besteht. Eine verdrehungssichere Führung des Stützfußes 30 am Führungsstiel 10 wird durch eine auf einer Mantellinie des Stiels 10 verlaufende Nut 42 gewährleistet, in die eine Rippe 44 der Lagerschale 40 einsteht. Die Klemmschale 46 weist zwei gegenüberliegende Rastleisten 48 auf, deren lichte Weite dazwischen etwas geringer ist als der Stieldurchmesser. Die Klemmschale 46 wird auf den Stiel 10 radial eingerastet. Dann wird der Stützfuß 30 mit seiner Lagerschale 40 auf die Klemmschale in axialer Richtung aufgeschoben, wobei die Rastleisten 48 entsprechende Vorsprünge 49 der Lagerschale 40 hintergreifen. In der Endstellung rasten Federlaschen 51 der Lagerschale 40 in Ausnehmungen 52 der Klemmschale 46 ein. Die Montage kann auch in umgekehrter Folge durchgeführt werden, indem zunächst die Lagerschale 40 radial an den Stiel angesetzt und dann die Klemmschale axial aufgeschoben wird. Die Klemmschale 46 weist einen Exzenterhebel 50 auf, mit dem der Stützfuß 30 an jeder Stelle des Führungsstiels 10 festlegbar ist. Durch Umlegen des Exzenterhebels 50 wird die Lagerschale 40 des Stützfußes 30 an den Stiel 10 herangezogen und kraftschlüssig mit diesem verbunden. Auf diese Weise wird eine definierte Höheneinstellung der Schneidebene möglich. Der Bogenabschnitt des Stützfußes 30 verläuft über etwa 90°, und der Krümmungsradius ist auf den Radius des Schutzschirmes 18 des Fadenschneideraggregates derart abgestimmt, dass das Fadenschneideraggregat gekippt und verschwenkt werden kann, ohne dass dessen Schutzschirm 18 am Stützfuß anstößt.

Dadurch, dass das Gerät am Boden über die Laufrollen 32 oder auch Gleitkufen abgestützt wird, ergibt sich eine bequeme Handhabung in jeder Kipp- bzw. Schwenkstellung. Es ist jedoch auch möglich, den Fadenschneider ohne Stützfuß freihändig zu benutzen, und zu diesem Zweck kann die Klemmschale 46 nach Lösen des Exzenterhebels 50 mit diesem in Stielrichtung in den Nuten 44 verschoben und vom Stützfuß getrennt werden. Dieser Stützfuß kann dann auf einfache Weise auch am Führungsstiel anderer Gartengeräte fixiert werden, die der Bodenbearbeitung dienen, beispielsweise an einem Rechen, einem Vertikutierer oder anderen Geräten, die mit Werkzeugen, insbesondere motorisch angetriebenen Werkzeugen, ausgerüstet sind.

### Bezugszeichenliste

- 10: Führungsstiel
- 12: Fadenschneideraggregat
- 14: Rotor
- 16: Schneidfaden
- 18: Schutzschirm
- 20: Doppelgelenkanordnung
- 22: erste Achse
- 24: zweite Achse
- 26: erster Auslöseknopf
- 28: zweiter Auslöseknopf
- 30: Stützfuß
- 32: Laufrollen
- 34: Platte
- 36: Randleisten
- 38: Verstärkungsrippen
- 40: Lagerschale
- 42: Nut
- 44: Rippe
- 46: aufrastbare Klemmschale
- 48: Rastleisten
- 49: Vorsprünge
- 50: Exzenterhebel
- 51: Federlaschen
- 52: Ausnehmungen

## Patentansprüche

1. Mit einem Führungsstiel ausgerüstetes, insbesondere als Fadenschneider ausgebildetes Gartengerät, mit einem am Stiel (10) in verschiedenen Höhenlagen festklemmbaren Stützfuß (30), der am Boden verfahrbare Laufrollen (32) trägt,
**dadurch gekennzeichnet, dass** der Stützfuß an seinem den Laufrollen (32) abgewandten Befestigungsende eine Lagerschale (40) aufweist, auf die eine Klemmschale (46) nach radialem Aufsetzen auf den Stiel (10) aufrastbar und mittels eines Exzenterhebels (50) auf dem Stiel kraftschlüssig festlegbar ist.

2. Gartengerät nach Anspruch 1,
**dadurch gekennzeichnet, dass** die Klemmschale (46) Rastleisten (48) aufweist, mit denen sie auf die Lagerschale (40) axial aufschiebbar ist und dabei Vorsprünge (49) der Lagerschale (40) hintergreift.

3. Gartengerät nach den Ansprüchen 1 und 2,
**dadurch gekennzeichnet, dass** die Lagerschale (40) Federlaschen (51) aufweist, die in der Endstellung in Ausnehmungen (52) der Klemmschale einrasten.

4. Gartengerät nach einem der Ansprüche 1 bis 3,
**dadurch gekennzeichnet, dass** der Stützfuß (30) am Führungsstiel (10) durch eine in eine Längsnut (42) des Stieles (10) eingreifende Rippe (44) der Lagerschale (40) drehfest geführt ist.

5. Gartengerät nach einem der Ansprüche 1 bis 4,
**dadurch gekennzeichnet, dass** der Stützfuß geknickt oder bogenförmig derart ausgebildet ist, dass der Stützfuß das Gartengerät in keiner Kipp- und/oder Schwenkstellung behindert.

6. Gartengerät nach Anspruch 5,
**dadurch gekennzeichnet, dass** der Stützfuß aus Kunststoff gefertigt ist und aus einer bogenförmigen Platte (34) mit Randleisten (36) und zick-zack-förmigen Verstärkungsrippen (38) besteht.

7. Gartengerät nach Anspruch 1,
**dadurch gekennzeichnet, dass** ein aus Motor, umlaufendem Schneidfaden (16) und Schutzschirm (18) bestehendes Fadenschneideraggregat (12) über eine Doppelgelenkanordnung (20) vom Stielende getragen wird.

8. Gartengerät nach Anspruch 7,
**dadurch gekennzeichnet, dass** das Doppelgelenk eine Kippachse (22) senkrecht zur Stielachse und parallel zum Boden und eine Schwenkachse (24) aufweist, die die Kippachse (22) senkrecht schneidet oder kreuzt.

9. Gartengerät nach Anspruch 8,
**dadurch gekennzeichnet, dass** die Schwenkachse (24) die Achse des Antriebsmotors senkrecht schneidet oder kreuzt.

10. Gartengerät nach den Ansprüchen 7 bis 9,
**dadurch gekennzeichnet, dass** vorbestimmte Kipp- und/oder Schwenkstellungen formschlüssig festlegbar und über Betätigungshandhaben (26 bzw. 28) auslösbar sind.

## Claims

1. A garden implement provided with a guide handle and in particular in the form of a line trimmer, comprising a support foot (30) which can be clamped fast on the handle (10) in various heightwise positions and which carries support rollers (32) which are displaceable on the ground, **characterised in that** at its fixing end remote from the support rollers (32) the support foot has a mounting shell (40) on which a clamping shell (46) can be latched after radial fitment on to the handle (10) and can be fixed on the handle in force-locking relationship by means of an eccentric lever (50).

2. A garden implement according to claim 1 **characterised in that** the clamping shell (46) has latching bars (48) with which it can be axially pushed on to the mounting shell (40) and **in that** case engages behind projections (49) of the mounting shell (40).

3. A garden implement according to claims 1 and 2 **characterised in that** the mounting shell (40) has spring bars (51) which in the end position latch into openings (52) in the clamping shell.

4. A garden implement according to one of claims 1 to 3 **characterised in that** the support foot (30) is guided non-rotatably on the guide handle (10) by a rib (44) of the mounting shell (40), which rib engages into a longitudinal groove (42) in the handle (10).

5. A garden implement according to one of claims 1 to 4 **characterised in that** the support foot is of an arcuate or bent configuration in such a way that the support foot does not obstruct the garden implement in any tilting and/or pivotal position.

6. A garden implement according to claim 5 **characterised in that** the support foot is made from plastic material and comprises an arcuate plate (34) with edge bars (36) and zigzag-shaped reinforcing ribs (38).

7. A garden implement according to claim 1 **characterised in that** a line cutter assembly (12) comprising a motor, a rotating cutting line (16) and a protection screen (18) is carried by the end of the handle by way of a double pivot arrangement (20).

8. A garden implement according to claim 7 **characterised in that** the double pivot has a tilt axis (22) perpendicular to the handle axis and parallel to the ground and a pivot axis (24) which perpendicularly intersects or crosses the tilt axis (22).

9. A garden implement according to claim 8 **characterised in that** the pivot axis (24) perpendicularly intersects or crosses the axis of the drive motor.

10. A garden implement according to claims 7 to 9 **characterised in that** predetermined tilt and/or pivotal positions can be fixed in positively locking relationship and are releasable by way of actuating handles (26 and 28 respectively).

## Revendications

1. Ustensile de jardin équipé d'un manche de guidage et notamment réalisé sous la forme d'un sectionneur à fil, comprenant une embase d'appui (30) pouvant être coincée fermement sur le manche (10) dans différentes positions en hauteur, et portant des rouleaux de roulement (32) mobiles sur le sol,
**caractérisé par le fait que** l'embase d'appui présente, à son extrémité de fixation tournée à l'opposé des rouleaux de roulement (32), une coque de montage (40) sur laquelle une cosse de blocage (46) peut être encliquetée après mise en place radiale sur le manche (10), et peut être verrouillée mécaniquement sur ledit manche au moyen d'un levier de réglage (50).

2. Ustensile de jardin selon la revendication 1,
**caractérisé par le fait que** la cosse de blocage (46) offre des barrettes de crantage (48) par lesquelles elle peut coulisser axialement sur la coque de montage (40) en emprisonnant alors, par-derrière, des protubérances (49) de ladite coque de montage (40).

3. Ustensile de jardin selon les revendications 1 et 2,
**caractérisé par le fait que** la coque de montage (40) comporte des pattes élastiques (51) s'encliquetant, dans la position extrême, dans des évidements (52) de la cosse de blocage.

4. Ustensile de jardin selon l'une des revendications 1 à 3,
**caractérisé par le fait que** l'embase d'appui (30) est guidée sur le manche de guidage (10), avec verrouillage rotatif, par l'intermédiaire d'une nervure (44) de la coque de montage (40) pénétrant dans une rainure longitudinale (42) dudit manche (10).

5. Ustensile de jardin selon l'une des revendications 1 à 4,
**caractérisé par le fait que** l'embase d'appui est de réalisation coudée ou cintrée, de telle sorte que ladite embase d'appui ne gêne ledit ustensile de jardin dans aucune position prise par basculement et/ou par pivotement.

6. Ustensile de jardin selon la revendication 5,
**caractérisé par le fait que** l'embase d'appui est fabriquée en matière plastique et est constituée d'une plaquette (34) en arc de cercle, à baguettes marginales (36) et à nervures de renforcement (38) configurées en zigzag.

7. Ustensile de jardin selon la revendication 1,
**caractérisé par le fait qu'**un appareil (12) de sectionnement par fil, composé d'un moteur, d'un fil rotatif de coupe (16) et d'un écran protecteur (18), est porté par l'extrémité du manche au moyen d'un ensemble (20) à articulation double.

8. Ustensile de jardin selon la revendication 7,
**caractérisé par le fait que** l'articulation double comporte un axe de basculement (22) perpendiculairement à l'axe du manche et parallèlement au sol, et un axe de pivotement (24) qui coupe ou croise perpendiculairement ledit axe de basculement (22).

9. Ustensile de jardin selon la revendication 8,
**caractérisé par le fait que** l'axe de pivotement (24) coupe ou croise perpendiculairement l'axe du moteur d'entraînement.

10. Ustensile de jardin selon les revendications 7 à 9,
**caractérisé par le fait que** des positions prédéterminées, prises par basculement et/ou par pivotement, peuvent être bloquées par concordance de formes et libérées par l'intermédiaire de manipulateurs d'actionnement (26, respectivement 28).
